# EUROPEAN PATENT SPECIFICATION

(11) **EP 3 647 106 B1**
(45) Date of publication and mention of the grant of the patent: **11.11.2026**
(21) Application number: 19169445.4
(22) Date of filing: 16.04.2019
(51) Int. Cl.: B60L 3/00, H02M 7/493

(54) **INVERTER SYSTEM FOR VEHICLE**
WECHSELRICHTERSYSTEM FÜR FAHRZEUG
SYSTÈME D'ONDULEUR POUR VÉHICULE

(30) Priority: 02.11.2018 KR 20180133265
(43) Date of publication of application: 06.05.2020
(73) Proprietor: Hyundai Motor Company, Seoul 06797 (KR); Kia Corporation, Seocho-gu Seoul 06797 (KR)
(72) Inventor: KIM, Beom Sik, 14244 Gyeonggi-do (KR); JUNG, Jin Hwan, 16700 Gyeonggi-do (KR); SHIN, Sang Cheol, 16522 Gyeonggi-do (KR); JANG, Ji Woong, 18270 Gyeonggi-do (KR); JANG, Ki Young, 21910 Incheon (KR); LEE, Ki Jong, 18109 Gyeonggi-do (KR)
(74) Representative: Isarpatent

(56) References cited:
- US-A1- 2004 262 057
- US-A1- 2018 233 908
- US-B2- 7 277 304

## Description

### TECHNICAL FIELD

The present disclosure relates to an inverter system for a vehicle, and more particularly, to an inverter system for a vehicle capable of improving efficiency and an output by driving an inverter according to a required output amount of the vehicle and thus allowing the vehicle to be driven according to a limp home mode when the inverter fails.

### BACKGROUND

Recently, technologies relating to eco-friendly vehicles using electrical energy as vehicle power have been actively developed in response to air pollution and the crisis of oil depletion. The eco-friendly vehicles include hybrid electric vehicles, fuel cell electric vehicles, electric vehicles, and the like.

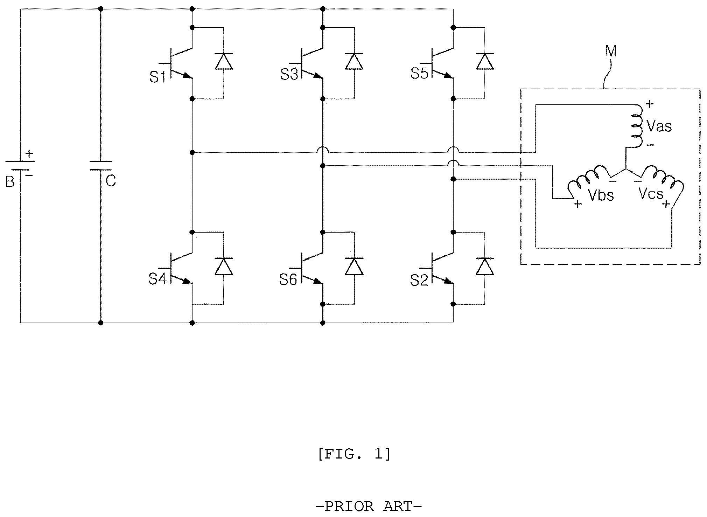

Referring to FIG. 1, in a conventional inverter system for a vehicle for outputting a high output, for a high output, a motor is driven by connecting a plurality of switching elements S1 to S6 in parallel. However, in the conventional inverter system, the high output can be obtained by connecting the plurality of switching elements to the motor in parallel, but in a fuel economic driving mode in which a required output amount of a motor is relatively low, excessive switching and conduction losses occur in the switching elements such that there is limitation in that fuel efficiency of the vehicle is entirely lowered. Further, in the conventional inverter system for a vehicle, there is a limitation in that limp home driving is impossible when a failure such as disconnection or the like occurs between the motor and the inverter.

US 2004/262057 A1 provides a non-highway vehicle including an engine, a DC power source driven by the engine and providing DC power via a DC bus, a traction motor, a circuit for connection to the DC bus for providing power to the traction motor, and a controller.

US 7 277 304 B2 provides a multiple DC-to-AC inverter system which is suitable for an electric or hybrid vehicle application and includes a plurality of inverters controlled by a single controller.

### SUMMARY

Accordingly, the present disclosure has been made keeping in mind the above problems occurring in the related art, and the present disclosure is intended to propose an inverter system for a vehicle, which is capable of improving efficiency and an output of the vehicle by differently controlling a point of time of turning a first inverter and a second inverter on and off on the basis of an output amount of a motor and maintaining driving of the vehicle through limp home driving when a failure such as disconnection between the motor and the first or second inverter.

According to the present invention, an inverter system for a vehicle, as defined by independent claim 1, includes: an energy storage device configured to store electrical energy; a first inverter including a plurality of first switching elements and configured to convert the electrical energy stored in the energy storage device into alternating-current (AC) electric power; a second inverter including a plurality of second switching elements different from the plurality of first switching elements; connected to the energy storage device in a parallel relationship with the first inverter, and configured to convert the electrical energy stored in the energy storage device into AC power; a motor configured to be driven by receiving the AC power converted by the first inverter and the second inverter; current sensors disposed between the first inverter and the motor and between the second inverter and the motor, respectively, and configured to detect a current input to the motor; and a controller configured to generate a pulse width modulation (PWM) signal for controlling driving of the motor, determine a failure occurrence position between the first inverter and the motor or the second inverter and the motor based on the detected current, configured to control the motor to be driven by the first inverter or the second inverter according to the failure occurrence position.

When a failure is determined as occurring between the first inverter and the motor, the controller allows the motor to be driven by the second inverter, and when the failure is determined as occurring between the second inverter and the motor, the controller allows the motor to be driven by the first inverter.

When the failure is determined as not occurring between the first and second inverters and the motor, the controller controls driving of the first inverter and the second inverter on the basis of a required output amount of the motor.

When the required output amount of the motor is smaller than a predetermined reference, the controller controls the plurality of first switching elements to drive the first inverter.

When the required output amount of the motor is greater than the predetermined reference, the controller controls the plurality of second switching elements to drive the second inverter.

Switching and conduction losses of the first inverter are smaller than those of the second inverter.

The first inverter has a rated output for driving the motor, which is smaller than that of the second inverter.

When the required output amount of the motor is greater than the predetermined reference, the controller may input a first PWM signal obtained by converting the PWM signal to the first inverter so as to control the plurality of first switching elements to be turned on prior to the plurality of second switching elements and to be turned off later than the plurality of second switching elements.

When the required output amount of the motor is greater than the predetermined reference, the controller may input a second PWM signal obtained by converting the PWM signal to the first inverter so as to control the plurality of second switching elements to be turned on later than the plurality of first switching elements and to be turned off prior to the plurality of first switching elements.

Each of the plurality of first switching elements may be a silicon carbide-field effect transistor (SiC-FET) and each of the plurality of second switching elements may be a Si-insulated gate type bipolar transistor (IGBT).

The motor may be a single motor which is operated by selectively or simultaneously receiving the electric power converted by the first inverter and the second inverter according to a required output of the motor.

### BRIEF DESCRIPTION OF THE DRAWINGS

The above and other objects, features and other advantages of the present disclosure will be more clearly understood from the following detailed description when taken in conjunction with the accompanying drawings, in which:
FIG. 1 is a diagram illustrating a conventional inverter system;
FIG. 2 is a diagram illustrating an inverter system for a vehicle according to one embodiment of the present disclosure;
FIG. 3 is a flowchart illustrating a driving flow of a motor by a first inverter or a second inverter according to a failure occurrence position between the first and second inverters and the motor in the inverter system for a vehicle according to one embodiment of the present disclosure;
FIG. 4 is a diagram illustrating a pulse width modulation (PWM) signal input to the first inverter and the second inverter when a required output amount of the motor is greater than a reference in the inverter system for a vehicle according to one embodiment of the present disclosure; and
FIG. 5 is a diagram illustrating an inverter system for a vehicle according to another embodiment of the present disclosure.

### DETAILED DESCRIPTION

Hereinafter, an inverter system for a vehicle according to exemplary embodiments of the present disclosure will be described with reference to the accompanying drawings.

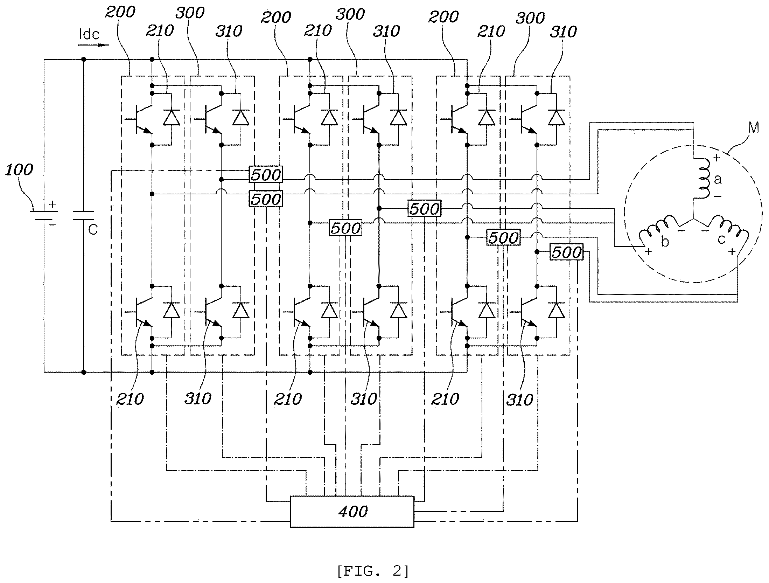

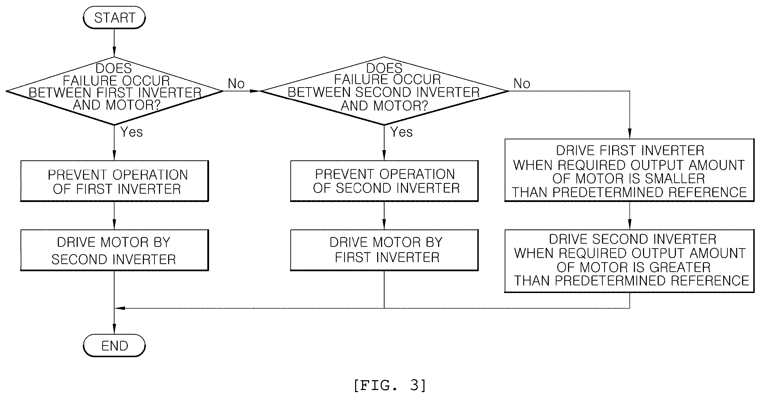

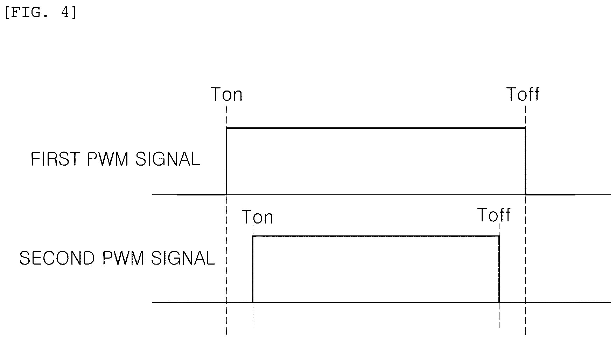

FIG. 2 is a diagram illustrating an inverter system for a vehicle according to one embodiment of the present disclosure, FIG. 3 is a flowchart illustrating a driving flow of a motor by a first inverter or a second inverter according to a failure occurrence position between the first and second inverters and the motor, and FIG. 4 is a diagram illustrating a pulse width modulation (PWM) signal input to the first inverter and the second inverter when a required output amount of the motor is greater than a reference.

As shown in FIG. 2, an inverter system for a vehicle according to one embodiment of the present disclosure may include an energy storage device 100, a first inverter 200, a second inverter 300, a motor M, a controller 400, and a current sensor 500. Hereinafter, a detailed configuration of the inverter system for a vehicle according to the present disclosure will be described in detail.

The energy storage device 100 stores electrical energy and serves to provide the electrical energy for driving the motor M. According to the present embodiment, the energy storage device 100 may be a battery for storing and providing electrical energy for driving the motor M of the vehicle. However, this is merely one example, and various devices including a supercapacitor and the like may be used as an energy storage device of the present disclosure as long as they can serve to store and provide electrical energy for driving a motor of a vehicle.

The first inverter 200 includes a plurality of first switching elements 210 and serves to convert the electrical energy stored in the energy storage device 100 into alternating-current (AC) electric power. Here, as shown in FIG. 2, the plurality of first switching elements 210 are connected in parallel to each other and a plurality of output terminals of the first switching elements 210 connected in parallel may be connected to each of Phases a, b, and c of the motor M. Further, the plurality of first switching elements 210 in the first inverter 200 may convert direct-current (DC) electric power transmitted from the energy storage device 100 into AC electric power, and the DC electric power is converted into the AC electric power through an inverter is a well-known technique so that a detailed description thereof will be omitted.

Each of the plurality of first switching elements 210 may be a silicon carbide-field effect transistor (SiC-FET). In the present disclosure, the reason for using the SiC-FET as each of the plurality of first switching elements 210 is that the SiC FET has switching and conduction losses that are relatively significantly lower than those of a Si-insulated gate bipolar transistor (IGBT) at a lower load. That is, when a required output amount of the motor M is small, the motor M is driven through the first inverter 200 including the SiC-FET such that switching and conduction losses may be reduced and thus overall fuel efficiency of the vehicle may be improved.

The first inverter 200 configured with the plurality of first switching elements 210 may have switching and conduction losses that are lower than those of the second inverter 300 which will be described below. Further, the first inverter 200 may have a rated output for driving the motor M, which is smaller than that of the second inverter 300.

The second inverter 300 includes a plurality of second switching elements 310 different from kinds of the plurality of first switching elements 210 and serves to convert the electrical energy stored in the energy storage device 100 into the AC electric power. Here, as shown in FIG. 2, the plurality of first switching elements 310 are connected in parallel and a plurality of output terminals of the first switching elements 310 connected in parallel may be connected to each of Phases a, b, and c of the motor M. Further, the second inverter 300 may be connected to the energy storage device 100 in a parallel relationship with the first inverter 200.

Further, the plurality of second switching elements 310 in the second inverter 300 may be turned on and off by the controller 400, which will be described below, to convert the DC electric power transmitted from the energy storage device 100 into the AC electric power. The conversion from the DC electric power into the AC electric power through the inverter is a well-known technique, a detailed description thereof will be omitted.

The second switching element 310 may be a silicon insulated gate bipolar transistor (Si-IGBT). In the present disclosure, the plurality of second switching elements 310 which are Si-IGBTs are connected in parallel and the motor M is driven by the second inverter 300 including the Si-IGBTs in a high output mode in which a required output amount of the motor M is high such that a high output may be output. For convenience of description, in the following detailed description, it will be described by assuming that the plurality of first switching elements 210 are SiC-FET devices and the plurality of second switching elements 310 are Si-IGBT devices.

The motor M may be driven by receiving the AC electric power converted through the first inverter 200 and the second inverter 300. That is, the motor M is driven through the electric power supplied through the first inverter 200 and the second inverter 300 to drive the vehicle.

As shown in FIG. 2, the current sensor 500 is disposed between the first and second inverters 200 and 300 and the motor M and may detect a current input to the motor M. Specifically, the current sensor 500 may be disposed between the plurality of output terminals of the plurality of first switching elements 210 connected in parallel and each of Phases a, b, and c of the motor M and may be disposed between a plurality of output terminals of the plurality of second switching element 310 connected in parallel and each of Phases a, b, and c of the motor M. That is, the current sensor 500 may detect a current input to each of Phases a, b, and c of the motor M at each of the plurality of output terminals of the plurality of first parallel-connected switching elements 210 and the plurality of second parallel-connected switching element 310.

The controller 400 may generate a PWM signal for controlling driving of the motor M. Here, the controller 400 may receive an output current of the motor M, compare the output current of the motor M with a current reference, and generate a PWM signal to direct the output current of the motor M to converge on the current reference.

Further, the controller 400 may determine a failure occurrence position between the first and second inverters 200 and 300 and the motor M on the basis of the detected current at the current sensor 500. In this case, when a current is not detected at a specific position through the current sensor 500, the controller 400 may determine a failure such as disconnection as occurring at the corresponding position. Further, if a failure occurrence position is determined, the controller 400 may drive the motor M by the first inverter 200 or the second inverter 300 according to the failure occurrence position.

For example, to describe with reference to FIG. 3, when a current is not detected between the first inverter 200 and the motor M, the controller 400 may determine a failure as occurring between the first inverter 200 and the motor M to prevent an operation of the first inverter 200 and allow the motor M to be driven by the second inverter 300 connected in a parallel relationship with the first inverter 200. On the other hand, when a current is not detected between the second inverter 300 and the motor M, the controller 400 may determine the failure as occurring between the second inverter 300 and the motor M to prevent an operation of the second inverter 300 and allow the motor M to be driven by the first inverter 200 connected in a parallel relationship with the second inverter 300.

As described above, in the present disclosure, when a failure such as disconnection or the like occurs between an inverter and a motor, the vehicle is continuously driving in a limp home mode according to the above-described method such that it is possible to store the vehicle in a service center for repairing.

On the other hand, when a failure is determined as not occurring between the first and second inverters 200 and 300 and the motor M, the controller 400 may control the driving of the first inverter 200 and the second inverter 300 on the basis of a required output amount of the motor M. Here, the required output amount of motor M may be a required output amount of the vehicle. In other words, the controller 400 may drive one or more of the first inverter 200 and the second inverter 300 according to a fuel economic driving mode in which the required output amount of the vehicle is relatively low and a sport mode or a high output mode in which the required output amount of the vehicle is relatively high, thereby driving the motor M.

More specifically, when the required output amount of the motor M is smaller than a reference, i.e., in the fuel economic driving mode in which the required output amount of the vehicle is relatively low, the controller 400 may drive the first inverter 200 by inputting the PWM signal to the plurality of first switching elements 210. In other words, when the required output amount of the motor M is smaller than the predetermined reference, the controller 400 converts the electrical energy provided from the energy storage device 100 into AC electric power through the first inverter 200 and transmits the AC electric power to the motor M, thereby improving overall fuel efficiency of the vehicle.

Further, when the required output amount of the motor M is greater than the reference, i.e., in the sport mode or the high output mode in which the required output amount of the vehicle is relatively high, the controller 400 may drive the second inverter 300 by inputting the PWM signal to the plurality of second switching elements 310. In other words, when the required output amount of the motor M is greater than the predetermined reference, the controller 400 converts the electrical energy provided from the energy storage device 100 into AC electric power through the second inverter 300 and transmits the AC electric power to the motor M, thereby outputting a high output.

Referring to FIG. 3, when the required output amount of the motor M is greater than the reference, the controller 400 may control the plurality of first switching elements 210 to be turned on prior to the plurality of second switching elements 310 and to be turned off later than the plurality of second switching elements 310 by inputting a first PWM signal obtained by converting the PWM signal to the first inverter 200. Further, when the required output amount of the motor M is greater than the predetermined reference, the controller 400 may control the plurality of second switching elements 310 to be turned on later than the plurality of first switching elements 210 and to be turned off prior to the plurality of first switching elements 210 by inputting a second PWM signal obtained by converting the PWM signal to the second inverter 300.

As described above, in the present disclosure, when the required output amount of the motor M is greater than the reference, the PWM signal is converted and input to the first inverter 200 and the second inverter 300 so as to control the plurality of first switching elements 210 to be turned on prior to the plurality of second switching elements 310 and to be turned off later than the plurality of second switching elements 310 such that switching losses of the plurality of first and second switching elements 210 and 310 of the first and second inverters 200 and 300 may be reduced.

Referring back to FIG. 2, the motor M according to one embodiment of the present disclosure may be a single motor which is operated by selectively or simultaneously receive the electric power converted by the first inverter 200 and the second inverter 300 according to the required output amount of the motor M. Specifically, as shown in FIG. 2 according to the present embodiment, when the motor M is a three-phase motor, the output terminals of the first inverter 200 and the second inverter 300 are commonly connected to Phases a, b, and c of the motor M. In this case, when the required output amount of the motor M is smaller than the predetermined reference, the controller 400 may drive the motor M by controlling the plurality of first switching elements 210 to drive the first inverter 200. Further, when the required output amount of the motor M is greater than the predetermined reference, the controller 400 may drive the motor M by controlling the plurality of second switching elements 310 to drive the second inverter 300 or by controlling the plurality of first switching elements 210 and the plurality of second switching elements 310 to drive the first inverter 200 and the second inverter 300.

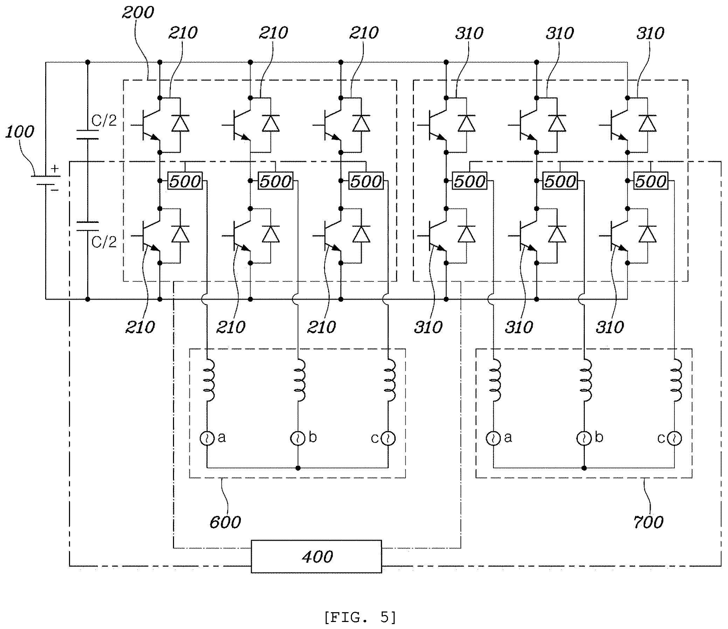

Referring to FIG. 5, a motor according to another embodiment of the present disclosure may include a first motor 600 driven by receiving electric power converted by the first inverter 200, and a second motor 700 driven by receiving electric power converted by the second inverter 300. More specifically, as shown in FIG. 5, when the motor is configured with the first motor 600 and the second motor 700, the output terminals of the first inverter 200 may be connected to Phases a, b, and c of the first motor 600, and the output terminals of the second inverter 300 may be connected to Phases a, b, and c of the second motor 700. In this case, when the required output amount of the motor is smaller than a predetermined reference, the controller 400 may drive the first motor 600 by controlling the plurality of first switching elements 210 to drive the first inverter 200. Further, when the required output amount of the motor is greater than the predetermined reference, the controller 400 may drive the second motor 700 by controlling the plurality of second switching elements 310 to drive the second inverter 300.

In accordance with the present disclosure, points of time for turning a first inverter and a second inverter on and off are controlled to be different on the basis of an output amount of a motor such that efficiency and an output of a vehicle can be improved and a switching loss can be reduced.

Further, when a failure such as disconnection or the like occurs between the motor and the first and second inverters, limp home driving is performed such that driving of the vehicle can be maintained.

## Claims

1. An inverter system for a vehicle, comprising:
an energy storage device (100) configured to store electrical energy;
a first inverter (200) including a plurality of first switching elements (210), wherein the first inverter (200) is configured to convert the electrical energy stored in the energy storage device (100) into alternating-current (AC) electric power;
a second inverter (300) including a plurality of second switching elements (310) different from the plurality of first switching elements (210), wherein the second inverter (300) is connected to the energy storage device (100) in a parallel relationship with the first inverter (200), and is configured to convert the electrical energy stored in the energy storage device (100) into AC power;
a motor (M) configured to be driven by receiving AC power converted by the first inverter (200) and the second inverter (300);
current sensors (500) disposed between the first inverter (200) and the motor and disposed between the second inverter (300) and the motor (M), respectively, wherein each of the current sensor (500) is configured to detect a current input to the motor (M); and
a controller (400) configured to generate a pulse width modulation (PWM) signal for controlling driving of the motor,
**characterized in that**,
the controller is configured to determine a failure occurrence position between the first inverter (200) and the motor (M) or the second inverter (300) and the motor (M) based on the detected current, to control the motor (M) to be driven by the first inverter (200) or the second inverter (300) according to the failure occurrence position,
wherein, when a failure occurs between the first inverter (200) and the motor (M), the controller (400) controls the motor (M) to be driven by the second inverter (300), and
when a failure occurs between the second inverter (300) and the motor (M), the controller (400) controls the motor to be driven by the first inverter (200),
wherein, when a failure does not occur between the first inverter (200) and the motor (M) or the second inverter (300) and the motor (M), the controller (400) controls driving of the first inverter (200) and the second inverter (300) based on a required output amount of the motor (M),
wherein, when the required output amount of the motor (M) is smaller than a reference value, the controller (400) controls the plurality of first switching elements (210) to drive the first inverter (200),
wherein, when the required output amount of the motor (M) is greater than a reference value, the controller (400) controls the plurality of second switching elements (310) to drive the second inverter (300),
wherein switching and conduction losses of the first inverter (200) are smaller than those of the second inverter (300),
wherein the first inverter (200) has a rated output for driving the motor (M), which is smaller than that of the second inverter (300).

2. The inverter system of claim 1, wherein, when the required output amount of the motor (M) is greater than a reference value, the controller (400) inputs a first PWM signal obtained by converting the PWM signal to the first inverter (200) to control the plurality of first switching elements (210) to be turned on prior to the plurality of second switching elements (310) and to be turned off later than the plurality of second switching elements (310).

3. The inverter system of claim 1, wherein, when the required output amount of the motor (M) is greater than a reference value, the controller (400) inputs a second PWM signal obtained by converting the PWM signal to the first inverter (200) to control the plurality of second switching elements (310) to be turned on later than the plurality of first switching elements (210) and to be turned off prior to the plurality of first switching elements (210).

4. The inverter system of claim 1, wherein each of the plurality of first switching elements is a silicon carbide-field effect transistor (SiC-FET), and each of the plurality of second switching elements is a Si-insulated gate type bipolar transistor (IGBT).

5. The inverter system of claim 1, wherein the motor (M) is a single motor operated by selectively or simultaneously receiving the electric power converted by the first inverter (200) and the second inverter (300) according to a required output of the motor (M).

## Patentansprüche

1. Wechselrichtersystem für ein Fahrzeug, umfassend:
eine Energiespeichervorrichtung (100), die dazu eingerichtet ist, elektrische Energie zu speichern;
einen ersten Wechselrichter (200), der mehrere erste Schaltelemente (210) aufweist, wobei der erste Wechselrichter (200) dazu eingerichtet ist, die in der Energiespeichervorrichtung (100) gespeicherte elektrische Energie in elektrischen Wechselstrom (AC) umzuwandeln;
einen zweiten Wechselrichter (300), der mehrere zweite Schaltelemente (310) aufweist, die von den mehreren ersten Schaltelementen (210) verschieden sind, wobei der zweite Wechselrichter (300) in einer parallelen Beziehung zu dem ersten Wechselrichter (200) mit der Energiespeichervorrichtung (100) verbunden ist und dazu eingerichtet ist, die in der Energiespeichervorrichtung (100) gespeicherte elektrische Energie in Wechselstrom umzuwandeln;
einen Motor (M), der dazu eingerichtet ist, durch Empfangen von Wechselstrom, der durch den ersten Wechselrichter (200) und den zweiten Wechselrichter (300) umgewandelt wurde, angetrieben zu werden;
Stromsensoren (500), die zwischen dem ersten Wechselrichter (200) und dem Motor angeordnet sind bzw. zwischen dem zweiten Wechselrichter (300) und dem Motor (M) angeordnet sind, wobei jeder des Stromsensors (500) dazu eingerichtet ist, einen in den Motor (M) eingespeisten Strom zu detektieren; und
eine Steuerung (400), die dazu eingerichtet ist, ein Impulsbreitenmodulations (PWM)-Signal zum Steuern des Antriebs des Motors zu generieren,
**dadurch gekennzeichnet, dass**
die Steuerung dazu eingerichtet ist, eine Fehlerauftrittsposition zwischen dem ersten Wechselrichter (200) und dem Motor (M) oder dem zweiten Wechselrichter (300) und dem Motor (M) auf der Grundlage des detektierten Stroms zu bestimmen, um den Motor (M) so zu steuern, dass er gemäß der Fehlerauftrittsposition durch den ersten Wechselrichter (200) oder den zweiten Wechselrichter (300) angetrieben wird,
wobei, wenn ein Fehler zwischen dem ersten Wechselrichter (200) und dem Motor (M) auftritt, die Steuerung (400) den Motor (M) so steuert, dass er durch den zweiten Wechselrichter (300) angetrieben wird, und
wenn ein Fehler zwischen dem zweiten Wechselrichter (300) und dem Motor (M) auftritt, die Steuerung (400) den Motor so steuert, dass er durch den ersten Wechselrichter (200) angetrieben wird,
wobei, wenn zwischen dem ersten Wechselrichter (200) und dem Motor (M) oder dem zweiten Wechselrichter (300) und dem Motor (M) kein Fehler auftritt, die Steuerung (400) das Ansteuern des ersten Wechselrichters (200) und des zweiten Wechselrichters (300) auf der Grundlage einer erforderlichen Ausgangsleistung des Motors (M) steuert,
wobei, wenn die erforderliche Ausgangsleistung des Motors (M) kleiner als ein Referenzwert ist, die Steuerung (400) die mehreren ersten Schaltelemente (210) so steuert, dass sie den ersten Wechselrichter (200) ansteuern,
wobei, wenn die erforderliche Ausgangsleistung des Motors (M) größer als ein Referenzwert ist, die Steuerung (400) die mehreren zweiten Schaltelemente (310) so steuert, dass sie den zweiten Wechselrichter (300) ansteuern,
wobei die Schalt- und Leitungsverluste des ersten Wechselrichters (200) kleiner sind als die des zweiten Wechselrichters (300),
wobei der erste Wechselrichter (200) eine Nennausgangsleistung zum Antreiben des Motors (M) aufweist, die kleiner ist als die des zweiten Wechselrichters (300).

2. Wechselrichtersystem nach Anspruch 1, wobei, wenn die erforderliche Ausgangsleistung des Motors (M) größer als ein Referenzwert ist, die Steuerung (400) ein erstes PWM-Signal, das durch Umwandeln des PWM-Signals erhalten wurde, in den ersten Wechselrichter (200) einspeist, um die mehreren ersten Schaltelemente (210) so zu steuern, dass sie vor den mehreren zweiten Schaltelementen (310) eingeschaltet werden und später als die mehreren zweiten Schaltelemente (310) ausgeschaltet werden.

3. Wechselrichtersystem nach Anspruch 1, wobei, wenn die erforderliche Ausgangsleistung des Motors (M) größer als ein Referenzwert ist, die Steuerung (400) ein zweites PWM-Signal, das durch Umwandeln des PWM-Signals erhalten wurde, in den ersten Wechselrichter (200) einspeist, um die mehreren zweiten Schaltelemente (310) so zu steuern, dass sie später als die mehreren ersten Schaltelemente (210) eingeschaltet werden und vor den mehreren ersten Schaltelementen (210) ausgeschaltet werden.

4. Wechselrichtersystem nach Anspruch 1, wobei jedes der mehreren ersten Schaltelemente ein Siliziumcarbid-Feldeffekttransistor (SiC-FET) ist und jedes der mehreren zweiten Schaltelemente ein Silizium-Bipolartransistor mit isolierter Steuerelektrode (IGBT) ist.

5. Wechselrichtersystem nach Anspruch 1, wobei der Motor (M) ein einzelner Motor ist, der durch selektives oder gleichzeitiges Empfangen der durch den ersten Wechselrichter (200) und den zweiten Wechselrichter (300) umgewandelten elektrischen Leistung gemäß einer erforderlichen Leistung des Motors (M) betrieben wird.

## Revendications

1. Système d'onduleurs pour un véhicule, comprenant :
un dispositif de stockage d'énergie (100) configuré pour stocker de l'énergie électrique ;
un premier onduleur (200) comportant une pluralité de premiers éléments de commutation (210), le premier onduleur (200) étant configuré pour convertir l'énergie électrique stockée dans le dispositif de stockage d'énergie (100) en énergie électrique à courant alternatif (AC) ;
un deuxième onduleur (300) comportant une pluralité de deuxièmes éléments de commutation (310) différents de la pluralité de premiers éléments de commutation (210), le deuxième onduleur (300) étant connecté au dispositif de stockage d'énergie (100) en parallèle avec le premier onduleur (200) et étant configuré pour convertir l'énergie électrique stockée dans le dispositif de stockage d'énergie (100) en énergie AC ;
un moteur (M) configuré pour être entraîné en recevant de l'énergie AC convertie par le premier onduleur (200) et le deuxième onduleur (300) ;
des capteurs de courant (500) disposés respectivement entre le premier onduleur (200) et le moteur, et entre le deuxième onduleur (300) et le moteur (M), chacun du capteur de courant (500) étant configuré pour détecter un courant entrant dans le moteur (M) ; et
un dispositif de commande (400) configuré pour générer un signal de modulation de largeur d'impulsion (PWM) afin de commander l'entraînement du moteur,
**caractérisé en ce que**
le dispositif de commande est configuré pour déterminer une position de survenue de défaillance entre le premier onduleur (200) et le moteur (M) ou entre le deuxième onduleur (300) et le moteur (M) sur la base du courant détecté, pour commander le moteur (M) de manière à ce qu'il soit entraîné par le premier onduleur (200) ou par le deuxième onduleur (300) en fonction de la position de survenue de défaillance,
dans lequel, lorsqu'une défaillance survient entre le premier onduleur (200) et le moteur (M), le dispositif de commande (400) commande le moteur (M) de manière à ce qu'il soit entraîné par le deuxième onduleur (300), et
lorsqu'une défaillance survient entre le deuxième onduleur (300) et le moteur (M), le dispositif de commande (400) commande le moteur de manière à ce qu'il soit entraîné par le premier onduleur (200),
dans lequel, lorsqu'aucune défaillance ne survient entre le premier onduleur (200) et le moteur (M) ou entre le deuxième onduleur (300) et le moteur (M), le dispositif de commande (400) commande l'entraînement du premier onduleur (200) et du deuxième onduleur (300) sur la base d'une puissance de sortie requise du moteur (M), dans lequel, lorsque la puissance de sortie requise du moteur (M) est inférieure à une valeur de référence, le dispositif de commande (400) commande la pluralité de premiers éléments de commutation (210) pour entraîner le premier onduleur (200),
dans lequel, lorsque la puissance de sortie requise du moteur (M) est supérieure à une valeur de référence, le dispositif de commande (400) commande la pluralité de deuxièmes éléments de commutation (310) pour entraîner le deuxième onduleur (300),
dans lequel les pertes de commutation et de conduction du premier onduleur (200) sont inférieures à celles du deuxième onduleur (300),
dans lequel le premier onduleur (200) présente une puissance nominale pour l'entraînement du moteur (M) qui est inférieure à celle du deuxième onduleur (300).

2. Système d'onduleurs selon la revendication 1, dans lequel, lorsque la puissance de sortie requise du moteur (M) est supérieure à une valeur de référence, le dispositif de commande (400) transmet un premier signal PWM obtenu en convertissant le signal PWM destiné au premier onduleur (200) afin de commander la pluralité de premiers éléments de commutation (210) de manière à ce qu'ils soient activés avant la pluralité de deuxièmes éléments de commutation (310) et désactivés après la pluralité de deuxièmes éléments de commutation (310).

3. Système d'onduleurs selon la revendication 1, dans lequel, lorsque la puissance de sortie requise du moteur (M) est supérieure à une valeur de référence, le dispositif de commande (400) transmet un deuxième signal PWM obtenu en convertissant le signal PWM au premier onduleur (200) afin de commander la pluralité de deuxièmes éléments de commutation (310) de manière à ce qu'ils soient activés plus tard que la pluralité de premiers éléments de commutation (210) et désactivés avant la pluralité de premiers éléments de commutation (210).

4. Système d'onduleurs selon la revendication 1, dans lequel chacun de la pluralité de premiers éléments de commutation est un transistor à effet de champ au carbure de silicium (SiC-FET), et chacun de la pluralité de deuxièmes éléments de commutation est un transistor bipolaire à grille isolée au silicium (IGBT).

5. Système d'onduleurs selon la revendication 1, dans lequel le moteur (M) est un moteur unique fonctionnant en recevant de manière sélective ou simultanée l'énergie électrique convertie par le premier onduleur (200) et le deuxième onduleur (300) en fonction d'une puissance de sortie requise du moteur (M).
